# EUROPEAN PATENT APPLICATION

(11) **EP 4 521 282 A1**
(43) Date of publication of application: **12.03.2025**
(21) Application number: 23195749.9
(22) Date of filing: 06.09.2023
(51) Int. Cl.: G06F 21/62, H04L 9/08, H04L 9/40

(54) **A COMPUTER-IMPLEMENTED METHOD FOR PROVIDING ACCESS TO ENCRYPTED, ARCHIVED AND THEN ERASED DATA**

(71) Applicant: Mastercard International Incorporated, Purchase, NY 10577 (US)
(72) Inventor: GRAJA, Hubert, Stepaside, Dublin (IE); GROARKE, Peter, Dublin (IE); HREIDARSSON, Gudmundur, Copenhagen (DK)
(74) Representative: Murgitroyd & Company

(57) **Abstract**

A computer-implemented method for providing access to erased data is provided. The method comprises: associating user data comprised in a first database with a user, the first database being controlled by a data manager; receiving a request from the user for the data manager to delete the user data; accessing a public key associated with a third party; generating encrypted data using the public key, the encrypted data comprising the user data; adding the encrypted data to a second database; and deleting the user data from the first database.

## Description

### FIELD OF THE INVENTION

The present disclosure relates to a computer-implemented method for providing access to erased data, such as user data, previously stored in a database.

### BACKGROUND TO THE INVENTION

Users (or consumers) make increasing use of services which result in the storage of their user data. In many cases, the supply of user data is a condition for using the service. Legislation confers a number of rights on users to control how their user data is used, such as a right to be forgotten (right to erasure). However, when a user wishes to erase their user data associated with the service, problems may occur when entities, such as legal authorities, require access to the user data. For example, a law enforcement entity may require access to user data as part of an investigation and as such, the erasure of user data may hinder such an investigation.

The present disclosure has been devised to mitigate or overcome at least some of the above-mentioned problems.

### SUMMARY OF THE DISCLOSURE

It will be appreciated that some embodiments may intersect with international, national or regional treaties, conventions, laws, regulations or rules; beyond those typically associated with patent law. The applicable laws will be evident to the person skilled in the art in the specific country in which the embodiments are being worked. Any implementations of the embodiments should comply with these local legal requirements and may require the implementations to be modified during the lifetime of the product and/or the patent in order to remain in compliance with these requirements.

In accordance with a first aspect of the present disclosure, there is provided a computer-implemented method for providing access to erased data, the method comprising: associating user data comprised in a first database with a user, the first database being controlled by a data manager; receiving a request from the user for the data manager to delete the user data; accessing a public key associated with a third party; generating encrypted data using the public key, the encrypted data comprising the user data; adding the encrypted data to a second database; and deleting the user data from the first database.

The term 'erased data' may be understood as data, such as user data associated with a user, which has been, or is going to be, erased or deleted by a data manager. For example, the erased data may be user data that has been erased or deleted by a data manager following a request from the associated user to erase or delete the data as part of their 'right to be forgotten'.

The `data manager' may be an entity exercising some degree of control over the first database. The data manager may be an entity acting on behalf of the entity that created the first database, or on behalf of a provider of a service which relies on data stored in the first database, or the service provider themselves. The data manager may be one or more persons, one or more entities, one or more software applications, one or more automated processes, or some combination thereof.

The present disclosure may provide a means for erasing or deleting user data from the first database in response to receiving a request from the user associated with the user data for the data manager to delete the user data, thereby complying with a user's right to be forgotten. The present disclosure may also provide a means for complying with a user's right to be forgotten, whilst also generating and maintaining a second database comprising encrypted data that is only readable by a third party. By populating the second database with the encrypted data, it is possible for the third party associated with the public key used to encrypt the user data to access the user data. In particular, the third party can use their corresponding private key to decrypt the encrypted data to access the user data. Accordingly, the third party, which may be a Legal Authority such as a law enforcement entity, may access the user data after the user has requested deletion of the user data, without breaching the user's right to be forgotten.

The term 'database' may refer to computer-implemented storage of data. It may be stored in a single computer location, such as a central server, distributed over two or more computer systems, such as a client and server part, or distributed over a plurality of systems and devices.

The second database may be a central server, such that a plurality of sets of encrypted data associated with respective third parties is stored in a centralised manner. In such embodiments, the computer-implemented method may further comprise: indexing the encrypted data on the second database with an index representative of the third party associated with the public key used to encrypt the user data, and a data owner associated with the user data. The data owner may be the user associated with the user data. In this way, each set of encrypted data may be indexed with an index representative of the corresponding third party and the corresponding user. Advantageously, it may be easier for the third party to access the correct set of encrypted data.

In some embodiments, the computer-implemented method further comprises: receiving a request from a third party to access the encrypted data; and providing the third party with access to the encrypted data. In some embodiments, the third party is provided access to all of the encrypted data stored on the second database. In this way, when a third party, such as a Legal Authority, requests access to the encrypted data, they may be provided with access to the encrypted data stored on the second database. The third party may use their private key to de-encrypt the encrypted data so as to access the user data. Advantageously, the third party is provided with a means for accessing user data after the user data has been erased from the first database.

In some embodiments, providing the third party with access to the encrypted data comprises: transmitting the encrypted data to the third party. In this way, the encrypted data is transmitted to the third party following receipt of the request to access the encrypted data. Due to the encrypted data being encrypted according to the public key associated with the requesting third party, there may be minimal risk of the user data being accessed by a party other than the requesting third party. Advantageously, a Legal Authority may easily access user data that has been deleted or erased following a user's request to delete or erase the user data.

In some embodiments, accessing the public key comprises: accessing a third database comprising the public key; and retrieving the public key. In this way, the one or more public keys may be easily accessed in a centralised database.

In some embodiments, the computer-implemented method further comprises: receiving a request from a new third party to add a new public key to the third database; and adding the new public key to the third database. Advantageously, the third database may be updated to add new public keys, which may be associated with new third parties (such as a new Legal Authority). Accordingly, when a new Legal Authority is created (for example, a new tax enforcement entity), the new Legal Authority may request to have a public key associated with the new Legal Authority added to the third database, so that they may access the user data.

In some embodiments, the third database is an external database. The term 'external database' may be understood as a database that is external to the entity that created and/or operates the first database. That is, the external database may be a database that is operated by a second entity that is not the entity that created and/or operates the first database. The external database may be a database that is operated by a governing body. In this way, a Legal Authority associated with the governing body may add a public key associated with the Legal Authority to the external database. The external database may therefore provide a centralised database, such that any number of entities associated with respective first databases can access the one or more public keys to generate respective second databases.

In some embodiments, the computer-implemented method further comprises: periodically decrypting and re-encrypting the encrypted data, wherein the decrypted data is re-encrypted using a second public key associated with the third party. The second public key may be a public key associated with the third party that is distinct from the first public key. The second public key may be generated following a public key rotation process. In some embodiments, it is the third party (for example a Legal Authority) that decrypts and re-encrypts the encrypted data, such that the data manager does not access the user data, and the user's right to be forgotten is met. In alternative embodiments, for example when the user has agreed to allow the data manager to decrypt and re-encrypt the encrypted data, it is the data manager that decrypts and re-encrypts the encrypted data. Periodically decrypting and re-encrypting the encrypted data may comprise a period that is monthly, annually, or any other suitable period. Advantageously, the user data may be more secure. Furthermore, the method may be more resilient to malicious decryption attempts. For example, as quantum computing (or other technology) capabilities continue to advance, and decryption capabilities become a reality, cryptography methods and public key lengths may change. The periodic re-encryption of data may allow the proposed method to adequately adapt to cryptographic standards as the standards change over time.

In accordance with a second aspect of the present disclosure, there is provided a system for providing access to erased data, the system comprising: a first database comprising user data associated with a user, the first database being controlled by a data manager; a second database arranged to store encrypted data; wherein the data manager is configured to: receive a request from the user for the data manager to delete the user data; access a public key associated with a third party; generate encrypted data by encrypting the user data with the public key; store the encrypted data on the second database; and delete the user data from the first database.

In some embodiments, the data manager is further configured to: index the encrypted data on the second database with an index representative of the third party associated with the public key used to encrypt the user data, and a data owner associated with the user data.

In some embodiments, the data manager is further configured to: receive a request from the third party to access the encrypted data; and provide the third party with access to the encrypted data.

In some embodiments, the data manager is further configured to: provide the third party with access to the encrypted data by: transmitting the encrypted data to the third party.

In some embodiments, the data manager is further configured to access the public key by: accessing a third database comprising the public key; and retrieving the public key.

In some embodiments, the data manager is further configured to: receive a request from a new third party to add a new public key to the third database; and add the new public key to the third database.

In some embodiments, the third database is an external database.

It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

### BRIEF DESCRIPTION OF THE DRAWINGS

One or more embodiments of the disclosure will now be described, by way of example only, with reference to the accompanying drawings, in which:
Figure 1 illustrates a system for managing a conventional database;
Figure 2 illustrates a system for providing access to erased data in accordance with a first aspect of the present disclosure;
Figure 3 illustrates a method for storing erased data in encrypted form and providing access to the erased data in accordance with a first aspect of the present disclosure;
Figure 4 shows optional steps of the method for managing public keys associated with external third parties; and
Figure 5 shows further optional steps of the method for re-encrypting encrypted data with new keys.

Note that the drawings are schematic and accompany the description, illustrating preferred and exemplary embodiments and not necessarily being drawn to scale.

### DETAILED DESCRIPTION

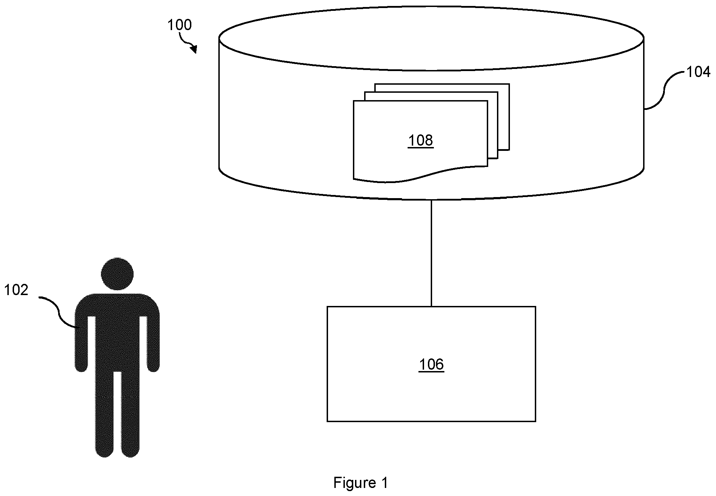

Figure 1 depicts a system for managing a conventional database 100. A first database 104 is provided, comprising user data 108 associated with one or more users 102. A data manager 106 controls the first database 104, wherein "control of a database" refers to management, including tasks such as access control, authentication control, encryption control, integrity control, backing up, and security. In many cases, the data manager 106 acts on behalf of the entity that created and/or operates the first database 104, and may be one or more persons, an automated process, or some combination thereof.

The first database 104 comprises one or more data records 108 associated with a user 102. These data records 108 represent the user data 108 for that user 102. Said user data 108 may comprise general data, such as: biographic data, such as phone numbers, e-mail addresses post addresses; payment data, such as transactions and credit card data; identification data; service usage data; and/or rating data. It will be appreciated that this is a non-exhaustive list and that the user data 108 may relate to any suitable data associated with the user 102.

The user data 108 may be provided directly by the user 102, be generated during use by the user 102 of a service associated with the first database 104, be copied from a further database to which the provider of the service (not depicted) may have access, publicly available social media profiles, and any combination thereof.

Most on-line services and many off-line services have an associated database, and providing that service relies on data associated with users comprised in that database. In addition to the general data associated with users, they typically store (retain) data specifically associated with the service. For example, internet service providers may provide internet access, and store data such as browser data, browsing histories, data transfer amounts, data transfer rates, port numbers and IP addresses used to access the service. Telecom providers may provide telephone voice services, and store data such as contacts, call logs and SMS messages. Search engine providers may provide search results, and store data such as recent search strings, websites visited based on the searches, location from which services are accessed and voice searches. Cloud service providers may provide cloud storage, and store data such as data transfer amounts, data transfer rates, port numbers and IP addresses used to access the service. Social media providers may provide access to their platform for sharing information, and store data such as interests, devices and locations used to access service, ads clicked on, employer, contacts and family relationships. E-mail service providers may provide receipt and delivery of e-mails, and store data such as contacts, data transfer amounts, data transfer rates and keywords that frequently appear in e-mails. Mobile software application providers may provide entertainment and/or service, and may store data which can be accessed on the mobile device such as contacts, call logs, SMS messages, GPS locations, photos and videos. Payment services providers may provide credit and/or debit card facilities, and store data such as transaction logs, authentication request logs, transaction refusal, account balance, transaction amounts and payment locations.

In the example of Figure 1, the user 102 establishes an arrangement with the service provider (not depicted) who relies on data in the first database 104 to operate their service. The arrangement may be established when the user 102 contacts the service provider to use the service, but it is usually established earlier to speed up usage of the service. The arrangement may be established by a form of registration, in which the user 102 is fully aware that an arrangement is being agreed. However, in many cases, the arrangement is established by the user 102 accepting unclear (or hidden) terms and conditions when registering or purchasing a software application (or app), particularly with mobile apps. The user 102 has some degree of control of their user data 108, and the data manager 106 also has some degree of control over said user data 108. The degree of control may vary and may include facilities such as no access (usually for privacy reasons), read-only access, write-access, delete access, anonymized access, and any combination thereof. Typically, the user is able to at least check and modify their user data 108. In many conventional cases, the data manager 106 has more control over the user data 108 than the user 102 associated with that data.

If the user 102 wishes to remove their user data 108 from the first database 104, they typically request the data manager 106 (or the service provider directly) to stop the use of the service and/or to delete said user data 108. The data manager 106 subsequently deletes the user data 108 from the first database 104. However, with a conventional database 100, although the user 102 may be able to arrange deletion of said user data 108, it is not possible for third parties (not shown), such as Legal Authorities, to subsequently access the user data 108. Third party access for these Legal Authorities may be required to carry out various tasks. For example, a law enforcement entity may require access to the user data to assist in an investigation.

A further example third party is a National Competent Authority (NCA) which has been designated to oversee a country's financial supervision. Each European Union (EU) and European Economic Area (EEA) Member State has an associated single NCA which has been designated to oversee the country's financial supervision. One of the roles of an NCA is Disputes Management between payment service providers (PSPs) in-country. This task requires comparing logs, the logs often containing user data, such as Personal Identifiable Information (PII) or Personal Data from the past. Thus, there is a need to facilitate access of user data to third parties, such as NCAs.

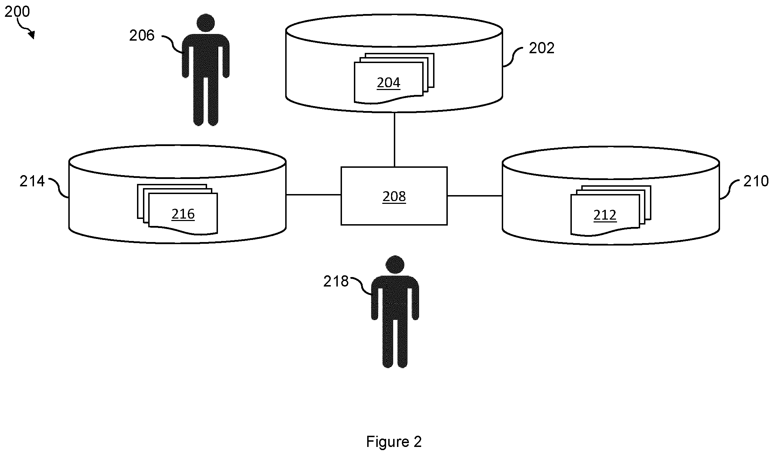

Figure 2 shows a system 200 for providing access to erased data.

The system 200 comprises: a first database 202 comprising user data 204 associated with a user 206, the first database 202 being controlled by a data manager 208. The data manager 208 is substantially similar to the data manager 106, and controls the first database 202, including tasks such as access control, authentication control, encryption control, integrity control, backing up, and security. The data manager 208 may be one or more persons, one or more entities, one or more software applications, one or more automated processes, or some combination thereof. The first database 202 is substantially similar to the first database 104 and comprises one or more data records 204 associated with the user 206. These data records 204 represent the user data 204 for the user 206.

The system 200 further comprises a second database 210 arranged to store encrypted data 212. The encrypted data 212 is generated by encrypting the user data 204 according to public keys associated with one or more third parties 218, such as a law enforcement entity 218. The second database 210 may be a central server 210 arranged to store the encrypted data 212 in a centralised manner. The second database 210 may be controlled by the data manager 208, such that the data manager 208 is able to provide access to the encrypted data 212 in response to a request to access the encrypted data 212. Alternatively, the second database 210 may be controlled by a second entity, such as a governing body (not shown). Control of the second database 210 may be established in a case by case basis. However, by default the second database 210 may be controlled by the data manager 208. The second database 210 therefore provides a means for storing encrypted user data in such a way that it is only accessible to the one or more third parties 218, such as the law enforcement entity 218.

The system 200 further comprises: a third database 214 comprising one or more public keys 216. The one or more public keys 216 are public keys 216 associated with the one or more third parties, such as the law enforcement entity 218. The one or more public keys 216 must be pre-registered and stored in the third database 214 prior to the generation of encrypted data 212, such that encrypted data 212 is generated for the one or more third parties that may require access to the encrypted data. The third database 214 may be a central server 214 arrange to store the one or more public keys 216 in a centralised manner. The third database 214 may be controlled by the data manager 208. Alternatively, the third database 214 may be an external database 214 operated by an entity that is different to the entity that created and/or operates the first database 202. In particular, the third database 214 may be operated by a second entity, such as a governing body. Accordingly, the third database 214 may be easily updated to include or remove public keys. Furthermore, the third database 214 operated by the second entity may provide a means for a plurality of entities operating databases similar to the first database 202.

As mentioned above, technical steps behind updating the third database 214 to include or remove public keys are technically easy to perform. However, to carry out such an update, strong authentication and authorization is performed. Thus, any actions to be carried out in relation to the public keys stored on the third database 214 are required to pass the strong authentication and authorization, improving security of the public keys.

The second database 210 and the first database 202 may be substantially the same database.

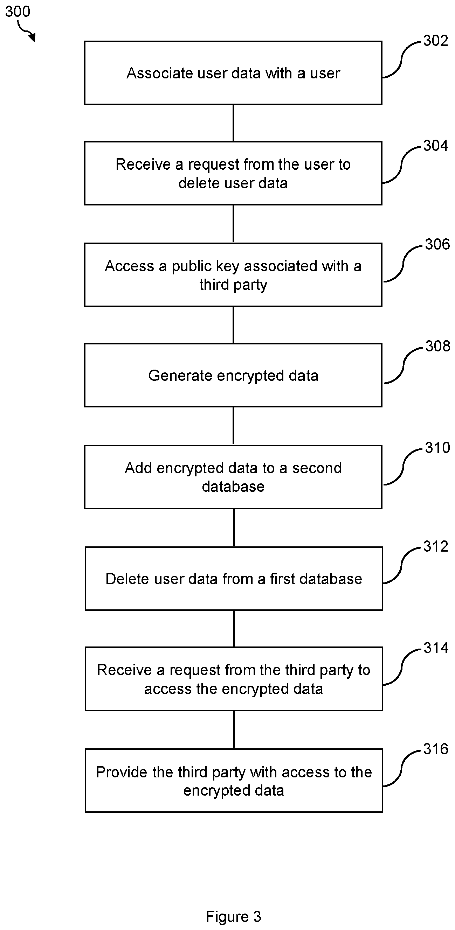

Figure 3 shows a computer-implemented method 300 for providing access to erased data.

In a first step 302 of the method 300, user data comprised in a first database is associated with a user, the first database being controlled by a data manager. The user data comprised in the first database may be manually associated with the user by the data manager. The user data may be automatically associated with the user during use by the user of a service associated with the first database. The user data may be provided directly by the user, be generated during use by the user of a service associated with the first database, be copied from a further database to which the provider of the service (not depicted) may have access, be publicly available social media profiles, and any combination thereof.

For example, the user data 204 comprised in the first database 202 is associated with the user 206, the first database 202 being controlled by the data manager 208.

At step 304, a request is received from the user for the data manager to delete the user data. The request may be received by any suitable means. For example, the user may interact with an application associated with the data manager and/or the entity that created and/or operates the first database. Alternatively, the user may interact directly with the data manager to express the request to delete the user data. The interaction may be indicative of the user requesting that the user data is deleted.

For example, a request is received from the user 206 for the data manager 208 to delete the user data 204.

At step 306, a public key associated with a third party is accessed. In particular, the public key associated with the third party is accessed by the data manager.

For example, a public key 216 associated with the law enforcement entity 218 is accessed by the data manager 208.

In some embodiments, accessing the public key comprises: accessing a third database comprising the public key; and retrieving the public key. For example, accessing the public key associated with the law enforcement entity 218 comprises: accessing the third database 214 comprising the public key 216 associated with the law enforcement entity 218; and retrieving the public key 216 associated with the law enforcement entity 218.

Alternatively, accessing the public key comprises: receiving the public key from the third party. For example, accessing the public key 216 associated with the law enforcement entity 218 comprises: receiving the public key 216 associated with the law enforcement entity 218.

At step 308, encrypted data is generated using the public key, the encrypted data comprising the user data.

In some embodiments, the data manager encrypts the user data with the public key associated with the third party, accessed in step 306, to generate the encrypted data. For example, the data manager 208 encrypts the user data with the public key 216 associated with the law enforcement entity 218, thereby generating the encrypted data 212.

Alternatively, the data manager encrypts the user data by: generating a symmetric key; encrypting the user data with the symmetric key; and encrypting the symmetric key using the public key associated with the third party, accessed in step 306. For example, the data manager 208 generates a fresh symmetric key; encrypts the user data with the fresh symmetric key; encrypts the fresh symmetric key with the public key 216 associated with the law enforcement entity 218, thereby generating the encrypted data 212. Thus, the encrypted data 212 in this embodiment comprises the user data encrypted with the symmetric key, and the symmetric key encrypted with the public key 216 associated with the law enforcement entity 218. As discussed further below, the third party may decrypt this encrypted data by first decrypting the symmetric key using the private key associated with the third party, and subsequently decrypting the encrypted user data using the now-decrypted symmetric key. Generating the encrypted data in this manner may have the technical advantage of increasing the speed at which the data is encrypted, because large data sets may be encrypted faster by symmetric key that the asymmetric Public key provided by the third party. Additionally, use of the symmetric key may mitigate limitations associated with asymmetric public keys. For example, the asymmetric public key may have an associated limitation of size of the encryption block and in cases of large data sets such a block may need to be segmented into smaller data sets supported by the asymmetric encryption public key.

It is preferable that the data manager encrypts the user data to avoid transmission of unencrypted user data to a separate entity for carrying out the encryption.

At step 310, the encrypted data is added to a second database. For example, the encrypted data 212 is added to the second database 210. More particularly, a new record is created in the second database 210, and the encrypted data is added to the new record.

The method 300 may further comprise indexing the encrypted data (or the record comprising the encrypted data) on the second database with an index representative of the third party associated with the public key used to encrypt the user data. For example, the encrypted data 212 is indexed with an index representative of the law enforcement entity 218 associated with the public key 216 used to encrypt the user data 204. More particularly, the encrypted data is indexed with the Public Key used to encrypt the user data, such that the third party is implicitly indicated by the index. Furthermore, the encrypted data is indexed with an ownership identifier so as to create a sufficient mark of ownership. For example, the encrypted data may be indexed, if permitted by local privacy laws, with a combination of PII/Personal Data. The encrypted data is also indexed with a time of persistence, such that a third party can narrow down records storing encrypted data to time values or periods that are of relevance. The index may also comprise a fourth index, the fourth index being a name of an operation that a given record was associated with (for example, a request to pay, and/or a PII data update/data retrieval).

Accordingly, in the present example, the encrypted data 212 encrypted using the public key 216 associated with the law enforcement entity 218 is easily accessible following a request from the law enforcement entity 218 to access the encrypted data 212.

At step 312, the user data is deleted from the first database. The user data may be deleted by the data manager. For example, the user data 204 is deleted from the first database 202 by the data manager 208.

At step 314, a request is received from the third party to access the encrypted data. The request may be received by any suitable means. For example, the third party may interact with an application associated with the data manager and/or the entity that created and/or operates the first database. Alternatively, the third party may interact directly with the data manager to express the request to access the encrypted data. The interaction may be indicative of the third party requesting access to the encrypted data.

The request may comprise a third party identification. The request may further comprise an ownership identifier. The request may further comprise further identifiers, such as the time of persistence and/or the fourth index. Thus, the request may comprise sufficient information for finding encrypted data that is of relevance. Without these identifiers, all encrypted data of the associated data owner may be accessed in the subsequent step.

At step 316, the third party is provided with access to the encrypted data. For example, the law enforcement entity 218 is provided with access to the encrypted data 212.

Providing the third party with access to the encrypted data comprises: transmitting the encrypted data to the third party. For example, the encrypted data 212 is transmitted to the law enforcement entity 218. Since the encrypted data 212 is encrypted using the public key associated with the law enforcement entity 218, only the law enforcement entity 218 is able to decrypt the encrypted data 212 and access the user data 204. Authentication and authorization means are used to assure that encrypted data is sent to only pre-established and pre-authorised third parties. Thus, the proposed method may be robust to weakening of encryption methods over time, because data is exposed only following authentication and authorization.

Accordingly, the method 300 provides a means for the user 206 to have their user data 204 deleted from the first database 202, in accordance with their right to erasure, whilst also providing a means for a third party, such as the law enforcement entity 218, to access the erased data.

Since the user data 204 that is accessible by the law enforcement entity 218 is encrypted using the public key 216 associated with the law enforcement entity 218, only the law enforcement entity 218 can read the user data 204 encrypted using the public key 216. In particular, the law enforcement entity 218 can decrypt the encrypted data 212 using their secret key (not shown). Therefore, if the law enforcement entity 218 requires access to the user data 204, for example for an investigation, they may access the user data 204 by decrypting the encrypted data 212.

It will be appreciated that whilst the above method 300 has been described with respect to a single third party (i.e., the law enforcement entity 218), there may be any number of third parties (for example, tax authorities and/or audit authorities), and each step may be carried out with respect to any number of third parties. For example, step 306 may include accessing a plurality of public keys, and step 308 may include encrypting the user data with each of the public keys. Accordingly, encrypted data (corresponding to the data requested to be deleted) is generated using each public key. Thus, a third party can access encrypted data encrypted using their public key, and can decrypt it using a corresponding private key that only the third party has access to.

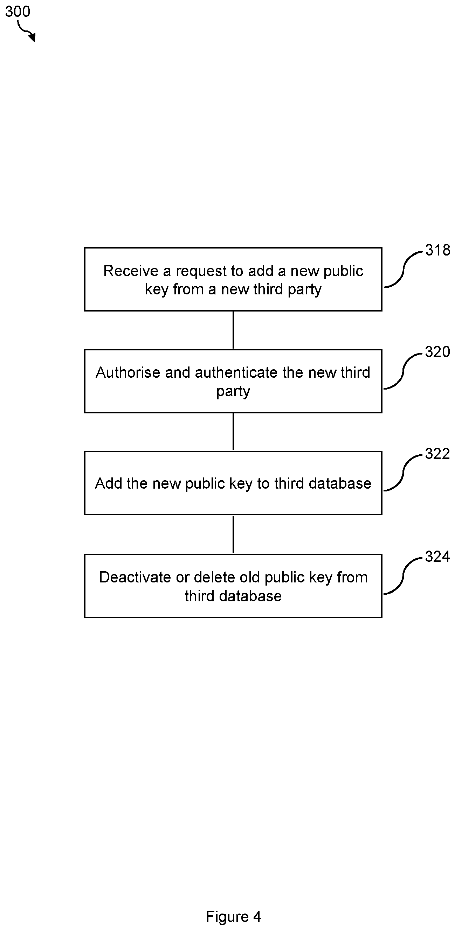

Figure 4 shows optional steps of the computer-implemented method 300 for providing methods of managing public keys associated with external third parties.

The method 300 further comprises step 318, receiving a request from a new third party to add a new public key to the third database. The new third party is a new third party that requires access to user data, even following the request from the user to delete the user data. For example, the new third party is an auditing entity (not shown). The new public key is a public key associated with the new third party.

The entity that receives the request is dependent on the entity that controls and/or maintains the third database. In particular, if the third database is associated with the governing body, it is the governing body that receives the request from the new third party to add the new public key to the third database.

For example, the governing body receives a request from the auditing entity to add the new public key associated with the auditing entity.

Before proceeding to step 322, the entity that controls and/or maintains the third database may authorise and authenticate 320 the new third party. This is to ensure that the new third party is what it claims to be, and that the new third party has a right (e.g., a legal right) to encrypt historical user data for any purpose.

The method 300 further comprises step 322, adding the new public key to the third database. In particular, the entity that receives the request adds the new public key associated with the new third party to the third database. Accordingly, in subsequent executions of the method 300, encrypted data is generated using the new public key, and the new third party is able to access the encrypted data associated with their public key.

For example, the governing body adds the new public key associated with the auditing entity to the third database 214, such that the one or more public keys 216 includes the new public key.

The method 300 further comprises step 324, deactivating or deleting the old public key from the third database. This step is in line with conventional approaches to store only one active public key associated with a given third party entity.

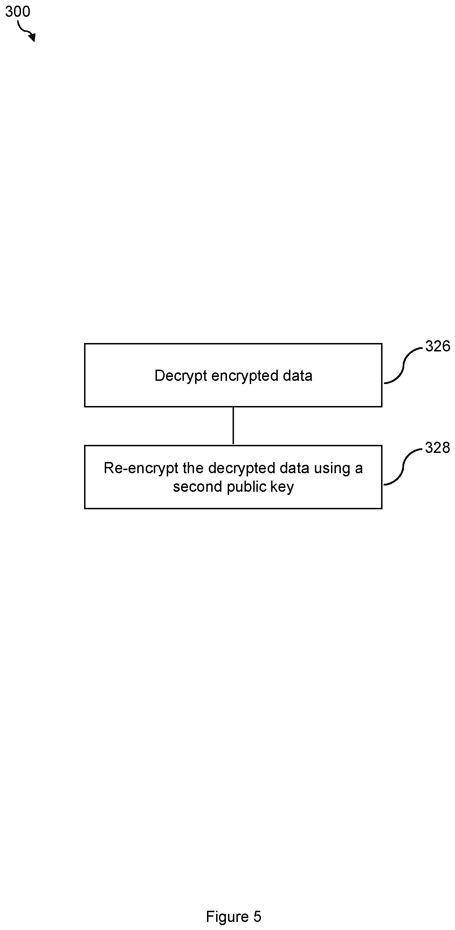

Figure 5 shows further optional steps of the computer-implemented method 300 for providing a method for re-encrypting encrypted data with new public keys.

The method 300 further comprises step 326, decrypting the encrypted data. The third party associated with the public key decrypts the encrypted data. For example, the law enforcement entity 218 decrypts the encrypted data 212. The data manager 208 communicates the encrypted data to the third party. The third party, and associated computing systems, decrypts the encrypted data using their private key associated with the first public key. Thus, the private key associated with the first public key is not shared. Furthermore, the decrypted data (i.e., the user data) is only handled by the third party, and the data manager doesn't handle the user data. Accordingly, the user's right to erasure is maintained as only the third party handles the decrypted data. However, a disadvantage of the third party decrypting the encrypted data is that such a communication of encrypted data from the data manager 208 to the third party 218 requires a substantial amount of network bandwidth.

The method 300 further comprises step 328, re-encrypting the decrypted data using a second public key associated with the third party 218. The third party 218 re-encrypts the decrypted data using the second public key. The third party 218 also stores the private key associated with the second public key, such that later decryption can be achieved. The third party 218 also communicates the re-encrypted data back to the data manager 208, and the data manager 208 stores the re-encrypted data in the respective record of the second database 210. As mentioned above, a disadvantage of the third party 218 decrypting and re-encrypting the encrypted data is that communication of the re-encrypted data requires a substantial amount of bandwidth.

Alternatively, the data manager 208 decrypts 326 the encrypted data and re-encrypts 328 the decrypted data. In particular, the data manager 208 receives the private key associated with the first public key from the third party 218; and decrypts the encrypted data that was encrypted using the first public key. The data manager 208 stores the re-encrypted data in the respective record of the second database 210. Communication of the private key associated with the first public key may be via secure means, so as to avoid a leak of the private key. Authentication and authorization steps may be used to avoid an incorrect exposure of the private key. An advantage of the data manager 208 carrying out the decryption is that since only the private key associated with the first public key is communicated, and not the entirety of the encrypted data, less network bandwidth is required.

Steps 322 and 324 are repeated periodically. In particular, the method 300 comprises periodically decrypting 322 and re-encrypting 324 the encrypted data, wherein the decrypted data is re-encrypted using a second public key associated with the third party 218. An advantage of this periodic re-encryption of data is that the system becomes more resilient to malicious decryption attempts. For example, as quantum computing (or other technology) capabilities continue to advance, and decryption capabilities become a reality, cryptography methods and public key lengths may change. The periodic re-encryption of data allows the proposed system and method to adequately adapt to cryptographic standards as the standards change over time.

Some embodiments may assign computer processing tasks to recipient processors, for example, but not limited to CPUs, GPUs, DSPs, GP-GPUs, quantum processor and/or processors optimised for artificial intelligence tasks. In such embodiments, the processors are the recipients and the processing tasks are the opportunities. In such embodiments, in for example, a complex cloud computing infrastructure, a large number of tasks, of differing types, requiring execution may be received and a large number of processors may be housed within the cloud computing infrastructure.

The description provided herein may be directed to specific implementations. It should be understood that the discussion provided herein is provided for the purpose of enabling a person with ordinary skill in the art to make and use any subject matter defined herein by the subject matter of the claims.

It should be intended that the subject matter of the claims not be limited to the implementations and illustrations provided herein, but include modified forms of those implementations including portions of implementations and combinations of elements of different implementations in accordance with the claims. It should be appreciated that in the development of any such implementation, as in any engineering or design project, numerous implementation-specific decisions should be made to achieve a developers' specific goals, such as compliance with system-related and business related constraints, which may vary from one implementation to another. Moreover, it should be appreciated that such a development effort may be complex and time consuming, but would nevertheless be a routine undertaking of design, fabrication, and manufacture for those of ordinary skill having benefit of this disclosure.

Reference has been made in detail to various implementations, examples of which are illustrated in the accompanying drawings and figures. In the detailed description, numerous specific details are set forth to provide a thorough understanding of the disclosure provided herein. However, the disclosure provided herein may be practiced without these specific details. In some other instances, well-known methods, procedures, components, circuits, and networks have not been described in detail so as not to unnecessarily obscure details of the embodiments.

It should also be understood that, although the terms first, second, etc. may be used herein to describe various elements, these elements should not be limited by these terms. These terms are only used to distinguish one element from another. For example, a first element could be termed a second element, and, similarly, a second element could be termed a first element. The first element and the second element are both elements, respectively, but they are not to be considered the same element.

The terminology used in the description of the disclosure provided herein is for the purpose of describing particular implementations and is not intended to limit the disclosure provided herein. As used in the description of the disclosure provided herein and appended claims, the singular forms "a," "an," and "the" are intended to include the plural forms as well, unless the context clearly indicates otherwise. The term "and/or" as used herein refers to and encompasses any and all possible combinations of one or more of the associated listed items. The terms "includes," "including," "comprises," and/or "comprising," when used in this specification, specify a presence of stated features, integers, steps, operations, elements, and/or components, but do not preclude the presence or addition of one or more other features, integers, steps, operations, elements, components and/or groups thereof.

As used herein, the term "if" may be construed to mean "when" or "upon" or "in response to determining" or "in response to detecting," depending on the context. Similarly, the phrase "if it is determined" or "if [a stated condition or event] is detected" may be construed to mean "upon determining" or "in response to determining" or "upon detecting [the stated condition or event]" or "in response to detecting [the stated condition or event]," depending on the context. The terms "up" and "down"; "upper" and "lower"; "upwardly" and "downwardly"; "below" and "above"; and other similar terms indicating relative positions above or below a given point or element may be used in connection with some implementations of various technologies described herein.

While the foregoing is directed to implementations of various techniques described herein, other and further implementations may be devised in accordance with the disclosure herein, which may be determined by the claims that follow. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A computer-implemented method for providing access to erased data, the method comprising:
associating user data comprised in a first database with a user, the first database being controlled by a data manager;
receiving a request from the user for the data manager to delete the user data;
accessing a public key associated with a third party;
generating encrypted data using the public key, the encrypted data comprising the user data;
adding the encrypted data to a second database; and
deleting the user data from the first database.

2. The computer-implemented method of claim 1, further comprising:
indexing the encrypted data on the second database with an index representative of the third party associated with the public key used to encrypt the user data, and a data owner associated with the user data.

3. The computer-implemented method of claim 1 or claim 2, further comprising:
receiving a request from the third party to access the encrypted data; and
providing the third party with access to the encrypted data.

4. The computer-implemented method of claim 3, wherein providing the third party with access to the encrypted data comprises:
transmitting the encrypted data to the third party.

5. The computer-implemented method of any preceding claim, wherein accessing the public key comprises:
accessing a third database comprising the public key; and
retrieving the public key.

6. The computer-implemented method of claim 5, further comprising:
receiving a request from a new third party to add a new public key to the third database; and
adding the new public key to the third database.

7. The computer-implemented method of claim 5 or claim 6, wherein the third database is an external database.

8. The computer-implemented method of any preceding claim, further comprising:
periodically decrypting and re-encrypting the encrypted data, wherein the decrypted data is re-encrypted using a second public key associated with the third party.

9. A system for providing access to erased data, the system comprising:
a first database comprising user data associated with a user, the first database being controlled by a data manager;
a second database arranged to store encrypted data;
wherein the data manager is configured to:
receive a request from the user for the data manager to delete the user data;
access a public key associated with a third party;
generate encrypted data by encrypting the user data with the public key;
store the encrypted data on the second database; and
delete the user data from the first database.

10. The system of claim 9, wherein the data manager is further configured to:
index the encrypted data on the second database with an index representative of the third party associated with the public key used to encrypt the user data, and a data owner associated with the user data.

11. The system of claim 9 or claim 10, wherein the data manager is further configured to:
receive a request from the third party to access the encrypted data; and
provide the third party with access to the encrypted data.

12. The system of claim 11, wherein the data manager is configured to provide the third party with access to the encrypted data by:
transmitting the encrypted data to the third party.

13. The system of any of claims 9 to 12, wherein the data manager is configured to access the public key by:
accessing a third database comprising the public key; and
retrieving the public key.

14. The system of claim 13, wherein the data manager is configured to:
receive a request from a new third party to add a new public key to the third database; and
add the new public key to the third database.

15. The system of claim 13 or claim 14, wherein the third database is an external database.
